Europäisches Patentamt

European Patent Office

Office européen des brevets

(19)

(11) Publication number: **0 062 396**
**A2**

(12) **EUROPEAN PATENT APPLICATION**

(21) Application number: **82300631.7**

(22) Date of filing: **09.02.82**

(51) Int. Cl.³: **G 01 V 3/10**

(30) Priority: **26.03.81 US 248022**

(71) Applicant: **ENVIRONMENTAL PRODUCTS CORPORATION, P.O. Box 4426, Arlington Virginia 22204 (US)**

(43) Date of publication of application: **13.10.82 Bulletin 82/41**

(72) Inventor: **Myers, John Leonard, 20 E. Floral Acres Dr., Tipp City Ohio 45371 (US)**

(84) Designated Contracting States: **AT BE CH DE FR GB IT LI LU NL SE**

(74) Representative: **Brunner, Michael John et al, Gill Jennings & Every 53 to 64, Chancery Lane, London WC2A 1HN (GB)**

(54) **Aluminium can detector.**

(57) Apparatus for determining whether an object (5) is an aluminium can comprises an oscillator circuit (60) for generating a reference signal. A drive coil (10) responsive to the reference signal emits a magnetic drive signal towards the object (5) and a sense coil (20) generates a detector signal from the magnetic drive signal after it has passed through the object (5). A phase comparator (3) is connected to receive the reference signal and the detector signal for generating a bilevel comparison signal whose duty cycle indicates the degree of phase coherence between the signals and an analyser circuit (R8, C7, 40) responsive to the comparison signal indicates that the object is not an aluminium can if the duty cycle is greater than the determined values.

## ALUMINIUM CAN DETECTOR

The present invention relates to field of metal detectors in general, and in particular, to detectors for selecting aluminium cans.

Two of industry's most immediate concerns are the high cost of energy and the depletion of mineral resources. It appears that the conditions responsible for those problems, particularly the consumption of non-renewable resources, will continue for the foreseeable future.

To help control energy costs and alleviate the effects of resources shortages, many individuals and companies have turned to recycling to reduce production costs and efforts. In particular, recycling of aluminium offers a promising area of savings. Rather than mine or import aluminium ore, aluminium companies now reprocess discarded aluminium products, such as beverage cans, into new aluminium products. .

One drawback to recycling aluminium cans has been that some studies showed that such recycling is uneconomical because of large handling costs for the cans. Separating aluminium cans from other metal cans can be time consuming and expensive. In addition, many machines designed to separate out aluminium cans have not been accurate enough to warrant their use. If a machine too often mistakenly identifies a non-aluminium product as aluminium, the machine's aluminium pile will have to be rechecked.

Other machines have such strict requirements for the cans selected as aluminium that use of these machines becomes impractical. One optical can sensor selects only structurally perfect cans; it will not recognise crushed or damaged aluminium cans even though the can's physical condition does not affect its use as a recyclable material.

According to the invention apparatus for detecting the presence of metal in a test area comprises a transmitter located on one side of the test area for emitting a drive signal into the test area; a receiver, located on the side of the test area opposite from the transmitter, for receiving a sense signal, the sense signal resulting from the drive signal passing through the test area; and means for comparing the phases of the drive signal and the sense signal to determine the presence of metal in the test area.

The present invention overcomes the problems and disadvantages of the prior art by transmitting a magnetic signal through an object. The object imparts a phase change to the transmitted signal and that phase shift is then examined to determine whether the object is an aluminium can. The detection of an aluminium can does depend upon the can's geometry, mass, and the area of the can's profile as seen by the magnetic signal.

Such a detector is both economical and accurate and capable of detecting crushed cans.

More particularly, the apparatus of this invention can be used to detect for the presence of a non-magnetic metal object greater than a certain size in the test area, the means for comparing the phases of the drive signal and the sense signal determining the presence of a non-magnetic metal object greater than a certain size in the test area.

The invention also includes a method of detecting for the presence of a metal object in the test area, which comprises the steps of transmitting a drive signal into the test area; receiving a sense signal from the test area, the sense signal resulting from the drive signal passing through the test area; and, comparing the phase of the drive signal and the sense signal to determine the presence of metal in the test area.

The accompanying drawings, which are incorporated in and constitute a part of this specification, illustrate one embodiment of the invention and, together with the description, serve to explain the principles of the invention.

Figure 1 shows the structure of the aluminium can detector;

Figure 2 is a block diagram of the detector circuit; and,

Figure 3 is a circuit diagram of the detector.

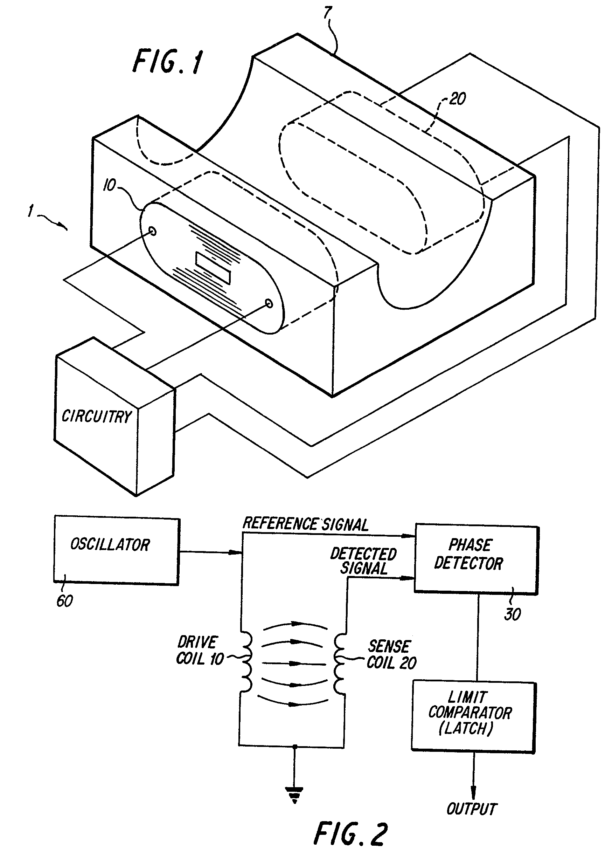

Figure 1 shows in perspective view an aluminium can detector 1 according to this invention. For example, detector 1 could be part of a soft drink machine, so that customers, when finished with their cans, could put them into this machine and receive payment for the empty can, if made of aluminium.

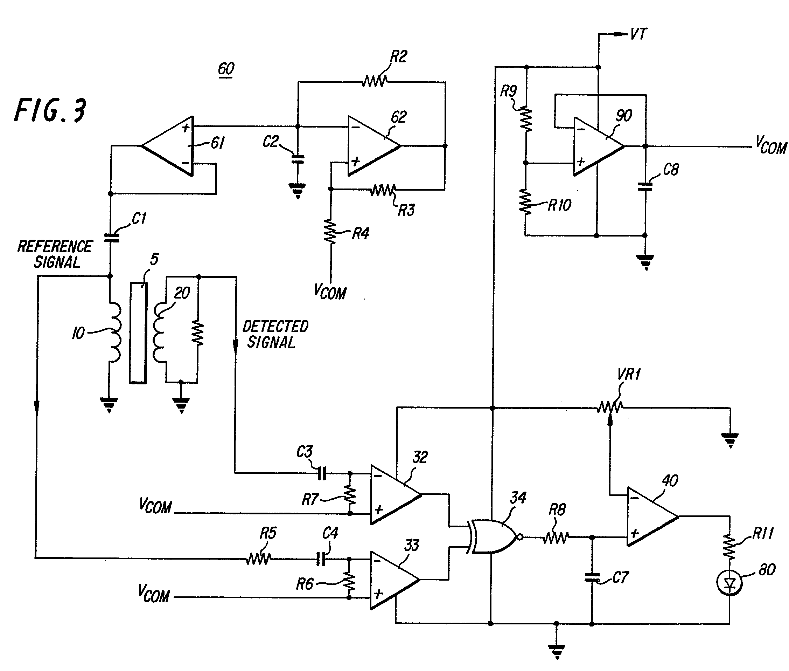

Detector 1 consists of a cradle 7 into which an object 5 (see Figure 3) typically a can, is placed to determine whether it is of aluminium. The can would lie on its side in the cradle 7.

This invention can also be used to detect the presence of certain kinds of metals in a test area. In the aluminium can detector shown in Figure 1, that test area would be the interior of cradle 7. The test area need not be confined to a certain structure but the area does need to be straddled by the coils described below.

The aluminium can detector contains a transmitter of a magnetic drive signal. In Figures 1 - 3, that transmitter is a drive coil 10 which contains, for example, 450 turns of 28 AWG wire.

Coil 10 generates the drive signal in response to a reference signal, which is the output of oscillator 60. This is shown in Figure 2. The frequency of the reference signal, and hence of the drive signal, is typically 1 to 10 Khz, and preferably about 4 Khz.

Figure 3 illustrates the circuit components which form the oscillator 60. The active element in the oscillator is an operational amplifier (op amp) 52 configured as an astable multivibrator. The output of op amp 62 connects to its inverting input via resistor R2. That inverting input is also connected to one side of capacitor C2, the other side of which is connected to ground.

Op amp 62's output is also connected to the non-inverting input terminal via resistor R3. In the preferred embodiment R2 and R3 are equal. The amplifier's non-inverting input also connects to a constant reference voltage, Vcon, through resistor R4.

When capacitor C2 charges to a particular value, the output of operational amplifier 62 will change from a high to a low value which in turn causes capacitor C2 to begin discharging. When the voltage on that capacitor drops sufficiently low, op amp 62 will change states again causing capacitor C2 to recharge and repeat the cycle.

Operational amplifier 61 is an isolation buffer for the oscillating signal . The non-inverting input of operational amplifier 61 connects to capacitor C2 and the inverting input connects to op amp 61's output. The output of buffer amplifier 61 feeds drive-coil 10 via DC blocking capacitor C1.

The oscillating reference signal across drive coil 10 causes the drive coil to generate a time-varying magnetic drive field.

That field is directed toward object 5. If this detector is used to determine the presence of metal in a test area, then the magnetic field would be directed into the test area.

On the other side of object 5, i.e. on the other side of the test area, a receiver picks up the magnetic field generated by the drive coil after it passes through the object or test area. That received magnetic field is referred to as the sense signal.

In this embodiment, the receiver is sense coil 20. Sense coil 20, like coil 10 has for example, 450 turns of 28 AWG wire and a protective shunt resistor R1 is connected across its terminals.

Sense coil 20 transforms the received magnetic sense signal into an electric signal called the detected signal. Typically the magnitude of the detected signal is on the order of millivolts.

For detecting the presence of metal in the test area the apparatus comprises means for comparing the phases of the drive signal and the sense signal. In the preferred embodiment shown in Figure 2, the comparing means includes a phase detector 30 which generates an output signal indicating the phase coherence of the drive signal and the sense signal.

The phases of the drive and sense signal are compared by comparing the phases of the reference and the detected signals. The reference and detected signals first pass through signal conditioning circuits, seen in Figure 3.

The signal conditioner for the reference signal includes operational amplifier 33. Resistor R6 bridges the positive and negative inputs of op amp 33. The reference signal connects to the inverting input of amplifier 33 through resistor R5 and blocking capacitor C4. The non-inverting input connects to the signal Vcon.

Vcon, as indicated, is a constant voltage used as a reference in this circuit. Vcon has a voltage between OV and the power supply voltage VT. The exact value of the voltage depends on the values of the resistors in a voltage divider network comprised of resistors R9 and R10 connected in series between the power supply voltage and ground. In the preferred embodiment, R9 and R10 are equal so Vcon is one half the power supply voltage.

The voltage at the junction of the resistors R9 and R10 feeds the non-inverting input of a buffer operational amplifier 90. The buffer's other input connects to the output of amplifier 90. Capacitor C8, connected across the buffer operational amplifier's output, filters high frequency signals from the Vcon signal.

The signal conditioner for the detected signal includes operational amplifier 32 with R7 connected between its inverting and non-inverting inputs. The inverting input of amplifier 32 connects to the sense signal via blocking capacitor C3, and the non-inverting input of amplifier 32 is connected to Vcon.

The purpose of the signal conditioners is to transform the reference and detected signals into bipolar signal having similar voltage levels for the high and low states, these levels also being compatible with the rest of the comparator means. The output of the conditioners is low when the input signal (the detected signal or the reference signal) is less than Vcon. When the input signal to the signal conditioners is greater than Vcon, the conditioner's output is high.

The comparing means includes means for forming a first signal representing the phase coherence between the drive signal and the sense signal. As herein embodied, that means for forming a first signal includes EXCLUSIVE NOR GATE 34.

The bilevel signals from operational amplifiers 32 and 33 are inputted into EXCLUSIVE NOR GATE 34. An EXCLUSIVE NOR GATE provides a high output when its input signals are the same, and provides a low output when its input signals are different.

The output of EXCLUSIVE NOR GATE 34 would always be high if the reference signal and the detected signal were completely in phase. Conversely, the output signal from the EXCLUSIVE NOR GATE would always be low if the sense signal and the drive signal were completely out of phase. In the typical situation, detected signal and the reference signal will be neither completely in phase nor completely out of phase, and the EXCLUSIVE NOR output signal will have both high and low portions.

If the object being examined by the detector is made of aluminium, then the sense signal will lag the drive signal, and similarly the detected signal will lag the reference signal by some amount. The phase relationship between the signals will be different if the object is non-metallic or if it contains some ferromagnetic material like steel.

If the object is aluminium, the angle by which the sense signals lags the drive signal depends upon the effective area of the sensed object's profile as seen by the magnetic drive signal. The greater that area, the greater will be the lag between the sense and the drive signals.

This feature allows the aluminium can detector to discriminate between aluminium cans and non-aluminium cans, even if those aluminium cans are crushed. An aluminium can which is pressed flat along its longitudinal axis is held by the cradle along its longitudinal edge. Since the crushed can has approximately the same profile area as does a new can, the detector will treat them equivalently.

The comparing means of the metal detecting apparatus of this invention also includes means for analysing the the characteristics of the first signal to determine the presence of metal in the test area. In the preferred embodiment, the first signal, which represents the phase coherence between the drive signal and the sense signal, is the output of EXCLUSIVE NOR GATE 34.

The duty cycle of that signal, i.e. the fraction of time that the EXCLUSIVE NOR GATE signal is high, represents the amount of phase difference between the reference and detected signals, and hence between the drive and sense signals. In the case of aluminium, a long duty cycle indicates very little phase lag and a short duty cycle indicates a significant phase lag.

The output of EXCLUSIVE NOR GATE 34 feeds an integrating circuit consisting of resistor R8 and capacitor C7. The integrating circuit creates an analogue signal whose voltage level is proportional to the duty cycle of the EXCLUSIVE NOR GATE output signal. If that output signal were always "high", the output of the integrating circuit would be at its highest value If the EXCLUSIVE NOR GATE signal remains "low", then the output of the integrating circuit would be at its lowest value. When the duty cycle is between those extremes, the integrating circuit output level is at an intermediate value between the highest and lowest values.

The output of the integrating circuit feeds the inverting input of an operational amplifier comparator 40. The non-inverting input of comparator 40 connects to the wiper arm of variable resistor VR1 connected between the supply voltage and ground. Consequently, the voltage at the positive input to comparator 40 is adjustable between 0 volts and power supply voltage.

The output of comparator 40 is high when the voltage at the wiper of VR1 is greater than the integrator circuit output signal and the comparator output is low if the integrator circuit signal is greater than voltage at the wiper VR1. Thus, the position of the wiper determines the threshold point of the comparator circuit.

With minor experimentation, it can be determined what output voltage of the integrator circuit corresponds to the detection of an aluminium can, or alternatively, to the detection of a metal in the testarea. In operation, VR1 would be adjusted so that the voltage on the non-inverting input of operational amplifier 40 would be the same as this output voltage.

In the case of aluminium cans, when the sense signal lags the drive signal by more than a certain phase angle, the output of the integrator circuit will be less than the voltage set by VR1. The comparator output would go high indicating the presence of an aluminium can. Conversely, if the sense signal lags the drive signal by less than that phase angle, then the voltage of the integrator circuit signal will be greater than the voltage set by VR1 and the output of the comparator 40 will go low, indicating that the object sensed is not an aluminium can.

If the circuit is used to detect the presence of metal in a test area, the above-described operation of the circuit will be similar. The only difference is that VR1 would be set to a voltage corresponding to the metal sought. As is also apparent VR1 can be set so that only objects or cans greater than a particular size will be detected.

As herein embodied, the output of comparator 40 drives LED 80 via current limiting resistor R11. A high comparator 40 output, indicating the presence of an aluminium can, is manifested by LED 80 being lit.

The comparator output signal could instead be used to drive an assortment of indicators and actuators depending upon the application. For example, the comparator could be connected to a bin switch such that after detection, the desired aluminium cans would be put in one bin and other objects would be put in another bin.

The following table contains values for the passive components in a specific embodiment of the circuit shown in Figure 3:

| R1 | 10K | ohms |
|----|-----|------|
| R2 | 33K | ohms |
| R3 | 33K | ohms |
| R4 | 18K | ohms |
| R5 | 1M | ohms |
| R6 | 22K | ohms |
| R7 | 1M | ohms |
| R8 | 100K | ohms |
| R9 | 2.2K | ohms |
| R10 | 2.2K | ohms |
| R11 | 470 | ohms |
| VR1 | 50K | ohms |
| C1 | 22 | microfarads |
| C3 | .05 | microfarads |
| C4 | .05 | microfarads |
| C7 | .1 | microfarads |
| C8 | 12 | microfarads |

## C L A I M S

1. Apparatus for detecting the presence of metal in a test area, the detecting apparatus comprising a transmitter (10), located on one side of the test area, for emitting a drive signal into the test area; a receiver (20), located on the side of the test area opposite from the transmitter, for receiving a sense signal, the sense signal resulting from the drive signal passing through the test area; and, means (30, 40) for comparing the phases of the drive signal and the sense signal to determine the presence of metal in the test area.

2. Apparatus according to claim 1, wherein the transmitter (10) and the receiver (20) are both coils.

3. Apparatus according to claim 1 or claim 2, wherein the comparing means (30,40) includes: means (32, 33, 34) for forming a first signal representing the degree of phase coherence between the drive signal and the sense signal; and, means (R8, C7, 40) for analysing the first signal to determine the presence of metal in the test area.

4. Apparatus according to claim 3, wherein the duty cycle of the first signal represents the degree of phase coherence between the drive signal and the sense signal and wherein the analysing means examines the duty cycle of the first signal to determine the presence of metal in the test area.

5. Apparatus for detecting the presence of a non-magnetic metal object greater than a certain size in a test area, the detecting apparatus comprising a transmitter (10) located on one side of the test area, for emitting a drive signal into the test area; a receiver (20) located on the side of the test area opposite from the transmitter for receiving a sense signal, the sense signal resulting from the drive signal passing through the test area; and, means (30,40) for comparing the phases of the drive signal and the sense signal to determine the presence of a non-magnetic metal object greater than a certain size in the test area.

6.      Apparatus for determining whether an object (5) is an aluminium can, the apparatus comprising an oscillator circuit (60) for generating a reference signal; a drive coil (10) responsive to the reference signal for emitting a magnetic drive signal towards the object (5); a sense coil (20) for generating a detector signal from the magnetic drive signal after it has passed through the object (5);  a phase comparator (30) connected to receive the reference signal and the detector signal for generating a bilevel comparison signal whose duty cycle indicates the degree of phase coherence between the signals; and an analyser circuit (R8, C7, 40) responsive to the comparison signal for indicating that the object is not an aluminium can if the duty cycle is greater than the determined value.

7.      A method for detecting for the presence of a metal object (5) in a test area, the method comprising the steps of transmitting a drive_signal into the test area; receiving a sense signal from the test area, the sense signal resulting from the passage of the drive signal through the test area; and  comparing the phases of the drive signal and the sense signal to determine the presence of metal in the test area.

0062396

FIG. 1

CIRCUITRY

OSCILLATOR

REFERENCE SIGNAL

DETECTED
SIGNAL

PHASE
DETECTOR

DRIVE
COIL 10

SENSE
COIL 20

LIMIT
COMPARATOR
(LATCH)

OUTPUT

FIG. 2

FIG.3

REFERENCE SIGNAL

DETECTED SIGNAL